Europäisches Patentamt

(19) European Patent Office

Office européen des brevets

(11) Publication number: **0 197 587**
**B1**

(12) **EUROPEAN PATENT SPECIFICATION**

(45) Date of publication of the patent specification:
26.07.89

(21) Application number: **86200496.7**

(22) Date of filing: **24.03.86**

(51) Int. Cl.⁴: **G03G 15/00,** G03B 27/62

(54) **Exposure device for sheets.**

(30) Priority: **04.04.85 NL 8500995**

(43) Date of publication of application:
**15.10.86 Bulletin 86/42**

(45) Publication of the grant of the patent:
**26.07.89 Bulletin 89/30**

(84) Designated Contracting States:
**DE FR GB IT NL SE**

(56) References cited:
**GB-A- 1 204 707**
**GB-A- 2 099 796**
**US-A- 3 575 503**

**PATENTS ABSTRACTS OF JAPAN, vol. 9, no. 6,
(P-326)[1729], 11th January 1985 & JP - A - 59 154 464**

(73) Proprietor: **Océ-Nederland B.V., St. Urbanusweg 43,
NL-5914 CC Venlo(NL)**

(72) Inventor: **Giezeman, Paulus Gerardus, Hamarplein 5,
NL-5951 CD Belfeld(NL)**
Inventor: **Ter Horst, Gerhardus Engelbertus Romualdus,
Begoniastraat 6, Nl-5971 AL Grubbenvorst(NL)**

(74) Representative: **Hanneman, Henri W.A.M. et al,
Océ-Nederland B.V. Patents and Information
Postbus 101, NL-5900 MA Venlo(NL)**

## Description

This invention relates to an exposure device for sheets, comprising an endless conveyor path of which an exposure station forms part, conveyor means which can repeatedly pass a sheet through the conveyor path for the purposes of exposure in one direction of passage, means for driving the conveyor means, introduction means for introducing a sheet into the endless conveyor path, selectively switchable discharge means for discharging a sheet from the endless conveyor path, and first measuring means which determine whether the length of a sheet that has been introduced is larger or smaller than a predetermined value and which, when the length is smaller than said value, deliver a control signal.

An exposure device of this kind is known form UK Patent No. 1 262 329, which describes a device comprising a second, shorter endless conveyor path which, in the exposure station, coincides with the longer endless conveyor path. A sheet is introduced into this shorter path and circulated therein for the performance of successive exposures when the measuring means have detected that the sheet is of a length shorter than said second path.

With this known device it is possible to expose a number of times without interruption only sheets whose length corresponds to the length of an endless conveyor path. If the second path is long, the interruptions will be relatively long, with the result that the time during which exposure can be effectively carried out is relatively short. If the second path is short, only the shortest sheets will be able to make use of that path, while all the longer sheets must make use of the much longer endless path corresponding to the length of the longest sheet, and this involves long interruptions between the successive exposures, particularly in the case of relatively short sheets.

It should be pointed out that the length of an endless conveyor path can hardly be made smaller than about 60 cm, because of the space required to locate conveyor means, exposure means, and sheet positioning mechanisms along the path, so that the known exposure device is in practice less suitable for sheets shorter than 60 cm, such as e.g. a sheet of A3 or A4 size.

The object of this invention is to provide an exposure device of the kind referred to in the preamble without the said limitations of the known exposure device.

According to the invention this is attained in that in an exposure device of the kind referred to in the preamble, the means for driving the conveyor means are adapted to be changed over in order to drive the conveyor means in the opposite direction, and in that control means are provided which, in response to the control signal, effect said changeover at a time when a sheet has passed the exposure station and which maintain said changeover during the time required to return the entire sheet through the exposure station.

The effect of this is that sheets of a length shorter than the length of the endless path can be exposed in rapid succession irrespective of their lengths.

Preferably, the exposure device according to the invention also comprises a conveyor path which follows on the endless conveyor path, a deflector element which can guide into the following conveyor path a sheet fed into the endless conveyor path, and adjusting means for actuating the deflector element, and the control means also deliver a said control signal when the adjusting means have been actuated.

The result of this is that sheets longer than the circumference of the endless conveyor path can also automatically be repeatedly passed through the exposure station for exposure purposes.

Preferably, the speed at which the conveyor means take an exposed sheet back through the exposure station is greater than the speed at which the conveyor means convey a sheet during the exposure in the direction of passage.

The effect of this is that the sheets returned along the exposure station can be exposed in even faster succession.

In an attractive embodiment of an exposure device according to the invention, the first measuring means comprise a first detector which is situated at an exit of the exposure station and which delivers a first signal in response to the passage of the trailing edge of a sheet leaving the exposure station, a second detector which, as considered in the direction of movement of said sheet, is situated at a distance L after the exposure station and which delivers a second signal in response to the leading edge of said sheet, where:

$$L = \frac{V_1}{V_1 + V_2} S - R,$$

where $V_1$ is the speed of passage, $V_2$ the return speed, $S$ the length of the endless conveyor path and $R$ the length of the exposure station, as well as a circuit which is connected to the first detector and to the second detector and which delivers the said control signal if the first signal is generated in the absence of the second signal.

The effect of this is that the control signal is delivered at the moment when the reversal of movement of the sheet can take place and hence no means are required for the delayed transmission of the control signal to the means which reverse the direction of drive of the conveyor means.

It should be noted that it is known per se, from UK Patent 1 211 326, to pass a sheet to and fro through an exposure station in order to carry out a plurality of exposures. However, that exposure device too has the disadvantage that not all sheets can be exposed in rapid succession irrespective of their lengths; in this case this applies for long sheets which first have to move back over the same long distance in order to be subjected to a subsequent exposure.

Other features and advantages of the invention will be apparent from the following description with reference to the accompanying drawings wherein:

Fig. 1 is a diagrammatic cross-section of a copying machine having an exposure device according to the invention,

Fig. 1a is a decision diagram with regard to the operation of the exposure device according to Fig.1,

Fig. 2 is a diagrammatic cross-section of a copying machine having another exposure device according to the invention,

Fig. 3 is a diagrammatic cross-section of a copying machine having yet another exposure device according to the invention and

Fig. 4 is a graph showing the time required respectively according to the aforementioned prior art and according to the invention for performing an exposure of a sheet as a function of the length thereof.

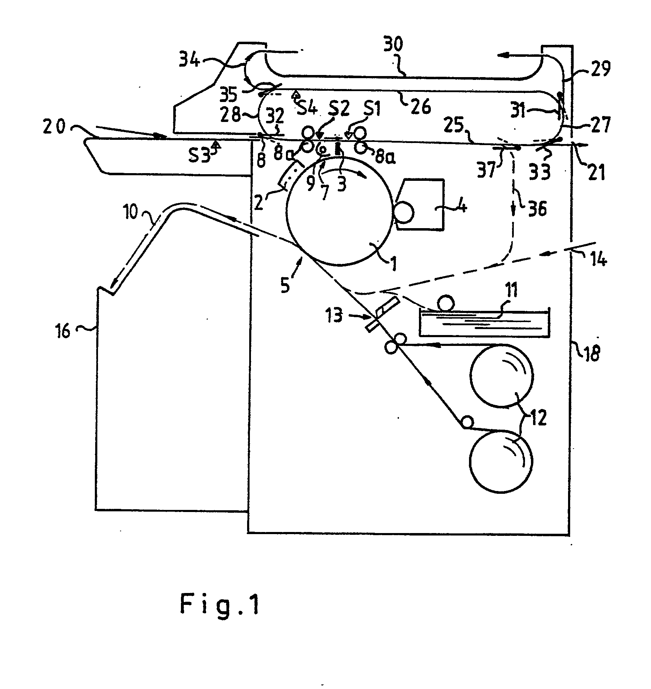

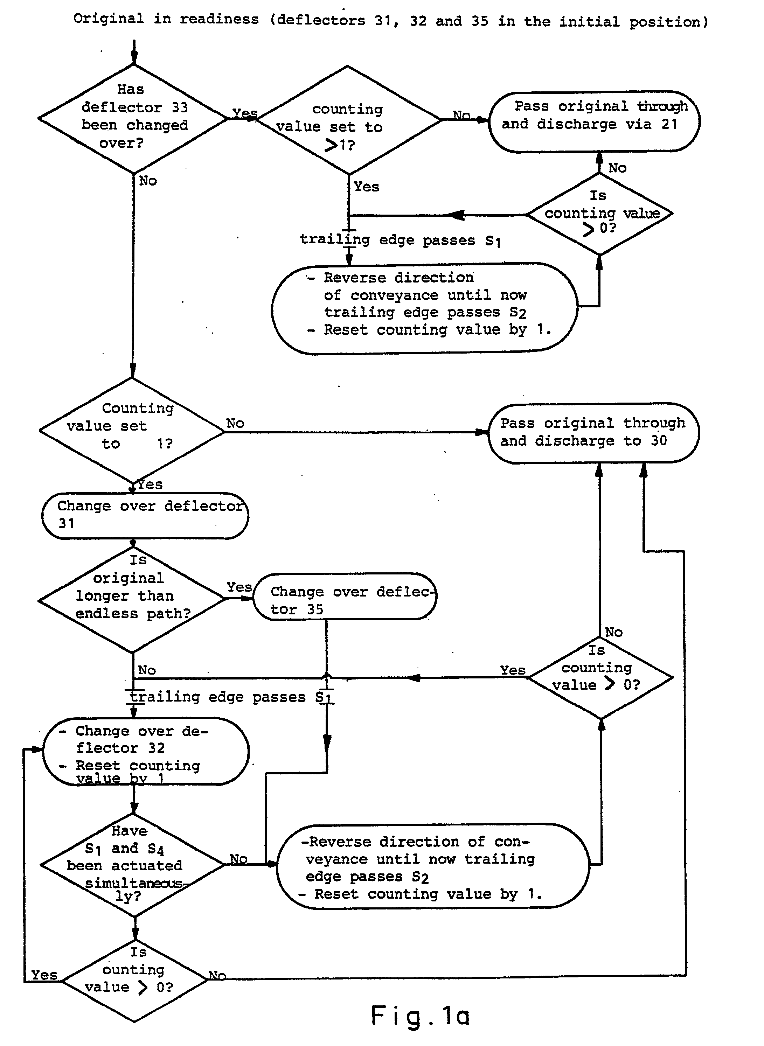

The copying machines shown in Figs. 1-3 each comprise a photoconductive drum 1 which can rotate in the direction indicated by an arrow. Along the circumference of the drum 1 there are disposed a charging device 2, an imaging device 3, a developing device 4, and an image transfer device 5. Imaging device 3 consists of an optical array, e.g., a SELFOC fibre array. On the side of the array remote from the photoconductive drum 1 there is disposed an exposure device 7 comprising an original conveyor path 8, having pairs of conveyor rollers 8a, and a lamp 9. An original fed through the conveyor path 8 in the direction indicated by an arrow, and illuminated by lamp 9, is imaged stripwise as an erect image by the optical array on the rotating photoconductive drum 1 charged by charging device 2. The resulting charge image is developed by developing device 4 as the photoconductive drum 1 continues to rotate, and this developed image is directly transferred, in the image transfer device 5, to a sheet of copy material 10, and fixed thereon. This sheet is supplied from a sheet pile 11 or from a supply reel of copy material 12 in web form, from which the sheet is cut off by the cutter 13.

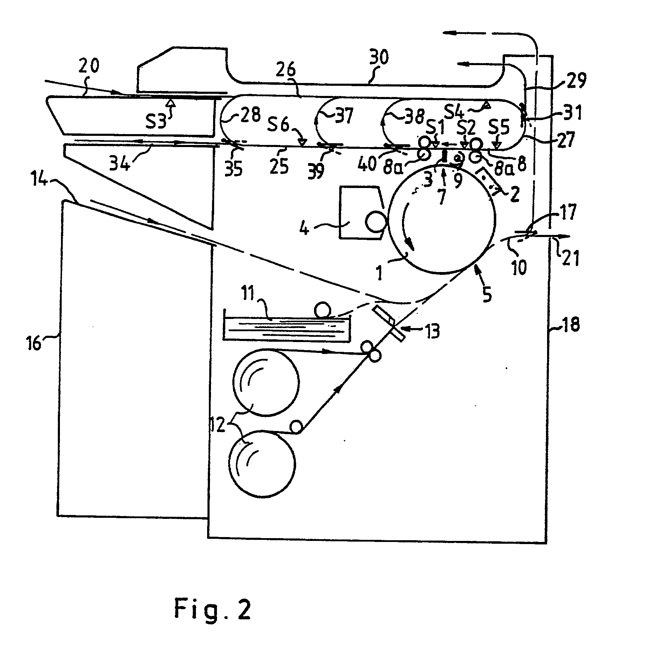

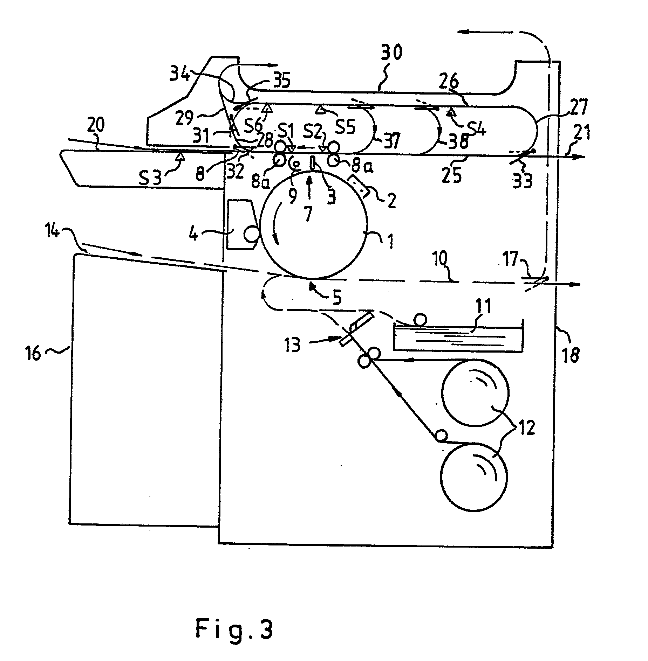

A sheet of copy material can also be introduced manually via an opening 14 provided for that purpose in the machine. In the copying machine represented in Fig.1, the copy formed on copy material 10 is discharged from the machine at side 16, which is the operating side of the machine, beneath the place where the originals for copying are introduced into and discharged from the machine. In the copying machines represented in Figs.2 and 3, the resulting copy is discharged either at side 18 situated opposite operating side 16 of the machine, or in a collecting tray at the top of the machine, depending upon the position of the deflector 17.

The above description of those parts of copying machines which are generally known is considered sufficient for an understanding of a copying machine in which the exposure device according to the invention can be used.

Various embodiments of an exposure device according to the invention will now be described successively with reference to Figs.1, 2 and 3.

The exposure device 7 represented in Fig.1 comprises a conveyor path 8 which extends from an introduction table 20 at the operating side 16 of the copying machine horizontally to the discharge aperture 21 formed in the opposite side 18 of the copying machine. The pairs of conveyor rollers 8a with the exposure zone situated therebetween are situated near the operating side 16 in the conveyor path 8. During imaging, an original introduced over table 20 into the conveyor path 8 is passed through the exposure zone in the direction indicated by an arrow by the pairs of conveyor rollers 8a. The direction of rotation of the pairs of conveyor rollers 8a is reversible so that an original can be passed back through the exposure zone in the opposite direction, as will be explained hereinafter. No imaging takes place during this return movement.

The exposure device according to Fig.1 comprises an endless conveyor path consisting of two straight path portions, 25 and 26 respectively, situated one above the other and two semi-curved curved path portions, 27 and 28 respectively, which interconnect the straight path portions. The bottom straight path portion 25 coincides with the conveyor path 8 in that part which extends through the exposure zone. On the side of the machine situated opposite the introduction table 20, the curved path portion 27 is followed by a conveyor path 29 which leads to a receiving tray 30 for originals at the top of the copying machine. The connection between the conveyor paths is such that an original moving through the endless conveyor path in the direction of the arrow is discharged or remains in the endless conveyor path depending upon the position of a deflector 31.

Where the introduction path along the introduction table 20 connects the endless conveyor path there is disposed a deflector 32 which, when in the solid line position illustrated, allows an original to be fed from the introduction table 20 into the endless path, while in the position shown in broken lines it permits an original supplied by rollers 8a in the direction opposite to the direction of the arrow to be passed from the bottom path portion 25 into the curved path portion 28.

A deflector 33 is disposed at the connection between the endless path and the discharge path leading to the opening 21 at the back 18 of the copying machine, while a deflector 35 is disposed at the connection between the top path portion 26, near the curved path portion 28, and a discharge path 34 also leading to the receiving tray 30. Depending upon the positions of the respective deflectors 33 and 35, an original passing in the direction of the arrow will either be guided into a discharge path or held in the endless path by said deflectors 33 and 35. Detectors $S_1$ and $S_2$ are disposed in that part of the conveyor path which is situated between the pairs of conveyor rollers 8a. $S_1$ can react to the trailing edge of an original moving in the direction of the arrow and $S_2$ can react to the trailing edge of an original moving in the direction opposite to the direction of the arrow. At the introduction table 20 there is disposed a detector $S_3$ which can react to the leading and trailing edges of an original introduced over table 20. In the top straight path portion 26 of the endless path a detector $S_4$ is disposed at a distance L from detector $S_1$ measured along the endless conveyor path in the direction of the arrow.

This distance

$$L = \frac{V1}{V1 + V2} \cdot S - R$$

where: V1 is the speed at which an original is passed through the endless conveyor path in the direction of the arrow,
V2 is the speed at which the original is passed through the endless conveyor path in the direction opposite to the direction of the arrow,
S is the length of the endless conveyor path, and
R is the distance between the detectors $S_1$ and $S_2$, which corresponds to the length of the exposure station.

The distance between the detectors $S_3$ and $S_4$ measured along the continuous path of which the curved path portion 27 forms part corresponds to the length of the endless conveyor path.

The speeds $V_1$ and $V_2$ are the average speeds at which the original moves through the endless conveyor path. At the beginning and end of each movement, the conveyor rollers' drive speed in the endless path gradually increases and decreases respecively in order to avoid acceleration forces which might cause an original to slip with respect to the rollers.

The operation of the exposure device according to Fig.1 will now be explained with reference to the decision diagram represented in Fig.1a. In the inoperative position, the deflectors 31, 32, 33 and 35 occupy the solid-line position.

The copying machine's control device (not shown) is set to a counting value corresponding to the number of copies required from an original to be copied. The original to be copied is brought into the conveyor path 8 via table 20. Particularly when the original cannot readily follow a curved path, e.g. because it is completely or partially (suspension strip) too rigid for that purpose, the deflector 33 is changed over prior to the introduction of the original so that the original will always follow a straight path. If the counting value has been set to 1, the original guided along and exposed in the exposure zone is discharged directly via opening 21. If the counting value has been set to more than 1, then when the trailing edge of the sheet conveying in the direction of the arrow passes the detector $S_1$, a signal is generated which is fed to the control system, in response to which the drive direction of the pairs of conveyor rollers 8a is reversed and the original is fed back, at higher speed if necessary, along path 8 and the counting value is reset by the value 1 in the copying machine's control system. When the now trailing edge of the original passes detector $S_2$, a signal is generated which is fed to the control system, in response to which the drive direction of the pairs of conveyor 8a is reversed and the initial situation in which the original was introduced is restored.

If deflector 33 has not been changed over and if the counting value set is 1, then the exposed original is fed directly via path 29 into the collecting tray 30. If the counting value set is more than 1 in that case, then prior to copying the deflector 31 is changed over in response to a signal delivered by the control device.

If, when the trailing edge of the original that has been introduced passes detector $S_3$ the leading edge of the original has already reached detector $S_4$, and the original does not therefore fit in the endless path, then in response to this the control device delivers a control signal for the changeover of deflector 35.

The reversal of the directions of conveyance, which then may be repeated several times, the resetting of the counting value, and so on, and the final discharge of the original, are effected in a manner corresponding to the method described hereinbefore in respect of a rigid original, except that the original is finally deposited in tray 30.

If the situation does not occur in which both detector $S_3$ and $S_4$ are simultaneously covered, and the original does therefore fit in the endless path, then when the trailing edge of the original that has been introduced passes detector $S_1$ a signal is delivered to the control device to reset the counting value by a value 1 and to change over the deflector 32. If, during delivery of this signal, the leading edge of the original has not yet reached detector $S_4$, a signal is also delivered for changing over the conveyance direction of the pairs of conveyor rollers 8a. If, in the latter case, the now trailing edge of the original passes detector $S_2$, then a signal is generated which is fed to the control system, in response to which the drive direction of the pairs of conveyor rollers 8a is again reversed and the initial position in which the original was introduced is restored. In the other case, the original continues to circulate in the direction of the arrow.

When in each of these two cases, the counting value reaches a value 0, a signal is generated and fed to the control device, in response to which signal the control device changes over deflector 31 and the original is passed on in the direction of the arrow and is fed via conveyor path 29 to the receiving tray 30.

The position where detector $S_4$ is disposed is so selected that at the given speeds $V_1$ and $V_2$ and given distance R between the detectors $S_1$ and $S_2$ it takes an equal length of time for an original of length L to move back in the direction of the arrow to the exposure position (time equal to $(S - R - L) V_1$) or to move back in the reverse direction to the exposure position (time equal to $(L + R) V_2$). It is possible to derive from $(S - R - L) V_1 = (L + R) V_2$:

$$L = \frac{V1}{V1 + V2} \cdot S - R$$

An original shorter than the length L is taken back for repeated exposure and an original longer than this lenth is taken further into the endless conveyor path for a repeated exposure.

After the last exposure of an original, a subsequent original can be introduced directly and be exposed with virtually no interruption. The copying machine represented in Fig. 1 can readily be arranged for the introduction of receiving material via the original input table 20, e.g. each time before an original to be copied is introduced via table 20. To this end, a connecting path 36 is provided between the original conveyor path 8 and the conveyor path in which receiving material is conveyed from tray 11 or from reel 12 to the image transfer station 5.

This path 36 is accessible via a deflector 37.

Although the copying machine represented in Fig. 1 can reach a high copying capacity with numerous changes of original, it has the disadvantage that only one endless conveyor path is available for the repeated copying of originals longer than the length L. Faster operation is possible for the repeated exposure of relatively long originals if a number of endless conveyor paths is available in lengths corresponding to a number of frequently occurring relatively large original sizes.

Fig. 2 represents copying machine having an exposure device according to the invention, by means of which originals of relatively considerable lengths can automatically be selectively fed to one of a number of endless conveyor paths. The largest endless conveyor path is formed, as in the copying machine according to Fig. 1, by two straight path portions 25 and 26 and two curved path portions 27 and 28 and has a length of 1200 mm. The introduction table 20 joins the top straight path portion 26. The exposure zone with the pairs of conveyor rollers 8a is situated at that end of the bottom path portion 25 which is remote from the operating side 16. The direction of conveyance of an original during exposure is indicated by an arrow.

The conveyor path 34 for originals longer than the length of the longest endless path joins the other end of the bottom straight path portion 25. Curved path portions 37 and 38 are provided between the straight path portions 25 and 26 in order to form endless conveyor paths of a length of 840 and 600 mm respectively. The path portions 37 and 38 are accessible via deflectors 39 and 40 respectively when they are in the broken-line positions. Deflector 40 is set to this position by the control device of the copying machine in response to a signal delivered when, on the passage of the trailing edge of an original past detector $S_3$, the leading edge of the original has not yet reached detector $S_5$ which is disposed at a distance of 600 mm from detector $S_3$. Deflector 39 is set into the broken-line position by the control device when, on passage of the trailing edge past detector $S_3$, the leading edge has reached detector $S_5$ but has not yet reached a detector $S_6$ situated at a distance of 840 mm from detector $S_3$. Apart from the use of a plurality of circulation paths and face-up introduction, the operation of the exposure device according to Fig. 2 is virtually the same as the operation of the exposure device according to Fig. 1. The difference is that immediately after each last exposure of an original, hence even in the case of an original that is exposed only once, the drive direction of the conveyor rollers 8a is reversed to be able to discharge the original via conveyor path 29. This latter feature means that on a change of originals copying is subject to some delay. It is not possible to use inflexible originals.

Fig. 3 represents a copying machine with an exposure device according to the invention in which relatively long originals can, as in the exposure device represented Fig.2, be automatically guided into one of a number of circulation paths and in which it is also possible to use inflexible originals.

To this end, the detectors $S_5$ and $S_6$ are disposed at distances of 600mm and 840 mm respectively from detector $S_1$ as measured in the direction of introduction along the maximum circulation path. The conveyor path 29 along which a finished original is coveyed to collecting tray 30 joins the curved portion 28 of the endless conveyor path.

Prior to copying, an original that has been introduced is fed to a position past detector $S_2$. During the following exposure, the original is moved past the exposure station in the direction of the arrow. On the last exposure deflector 31 is changed over and the original moving in the direction of the arrow is deposited in receiving tray 30 on the operating side via conveyor path 29 so that it can be readily removed.

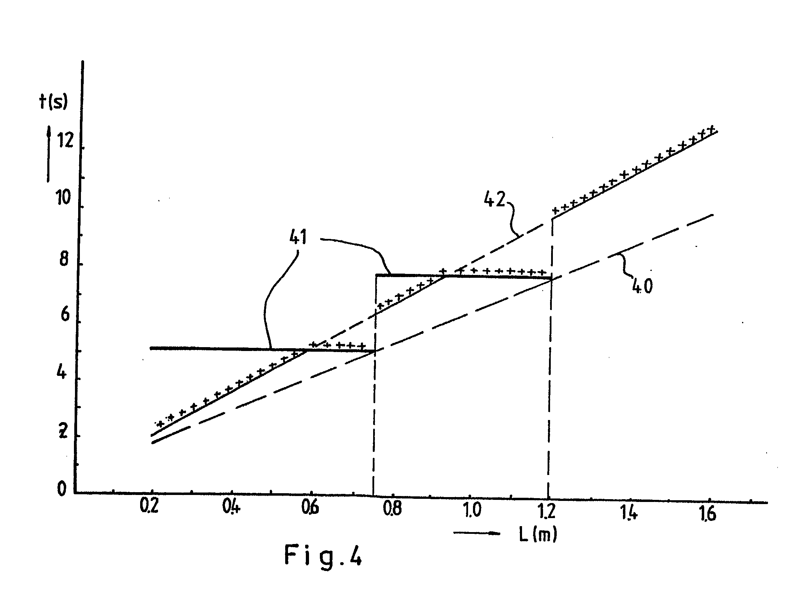

Fig. 4 represents the cycle time required for an original requiring repeated exposure to be exposed once as a function of the length of said original. Line 40 illustrates cycle times for the ideal situation in which each original exposed at a speed of 10 m/min would have an endless conveyor path of a length corresponding to the length of the original concerned.

Line 41 illustrates the cycle times for a copying machine according to the prior art, in which one relatively long and one relatively short endless conveyor path are provided. The represented line 41 consists of two horizontal line portions. The ideal situation is achieved only at places where these line portions coincide with line 40.

The cycle time is very unfavourable in the case of originals much shorter than the endless conveyor path in which they have to move.

Straight line 42 illustrates the cycle times for a copying machine in which the originals for repeated exposure are returned at accelerated speed along the same path after each exposure.

The lines indicated with plus signs illustrate the cycle times achieved in a copying machine according to the invention. The shortest originals, shorter than 600 mm in the example, are given an accelerated return movement for retention purposes. Somewhat longer originals, of a length between 600 mm and 750 mm in the example, are circulated in the shorter endless conveyor path for retention. Even longer originals, of a length between 750 mm and 1200 mm in the example are kept in the longer endless conveyor path for retention, originals of a length between 750 mm and approximately 900 mm being given an accelerated return movement each time and originals of a length between 900 mm and 1200 mm being circulated.

It will be apparent that the ideal situation according to line 40 is increasingly approached with an increasing number of endless paths over the two shown in Fig. 4. Originals longer than the 1200 mm, the length of the longest endless path, are given an accelerated return movement for retention.

Fig. 4 disregards the influence that the changes of originals can have on the cycle times. As already indicated, this adverse effect is relatively greater in the case of copying machines represented in Fig. 2 and Fig. 3, in which the conveyor path is blocked by a returning original respectively after and before a series of exposures of an original.

## Claims

1. An exposure device for sheets, comprising an endless conveyor path (25,26,27,28) of which an exposure station (7) forms part, conveyor means (8a) which can repeatedly pass a sheet through the conveyor path (25,26,27,28) for the purposes of exposure in one direction of passage, means for driving the conveyor means (8a), introduction means (20) for introducing a sheet into the endless conveyor path, selectively switchable discharge means (31) for discharging sheets from the endless conveyor path, and first measuring means $(S_1,S_4)$ which determine whether the length of a sheet that has been introduced is larger or smaller than a predetermined value and which, when the length is smaller than said value, deliver a control signal, characterised in that the means for driving the conveyor means (8a) are adapted to be changed over in order to drive the conveyor means (8a) in the opposite direction, and in that control means are provided which, in response to the control signal, effect said changeover at a time when a sheet has passed the exposure station (7) and which maintain said changeover during the time required to return the entire sheet through the exposure station.

2. An exposure device according to claim 1, characterised in that there is also provided a conveyor path (34) which follows on the endless conveyor path (25,26,27,28), a deflector element (35) which can guide into the following conveyor path (34) a sheet fed into the endless conveyor path, and adjusting means for actuating the deflector element (35), and in that the control means also deliver a said control signal when the adjusting means have been actuated.

3. An exposure device according to claim 2, characterised in that second measuring means $(S_3,S_4)$ are provided, which determine whether the length of a sheet that has been introduced is greater or smaller than a value corresponding to the length of the endless conveyor path (25,26,27,28) and which actuate the adjusting means if the determined length is greater than said length.

4. An exposure device according to any one of the preceding claims, characterised in that the speed at which the conveyor means (8a) take an exposed sheet back through the exposure station (7) is greater than the speed at which they convey a sheet during the exposure in the direction of passage.

5. An exposure device according to any one of the preceding claims, characterised in that the first measuring means $(S_1,S_4)$ comprise a first detector $(S_1)$ which is situated at an exit of the exposure station (7) and which delivers a first signal in response to the passage of the trailing edge of a sheet leaving the exposure station (7), a second detector $(S_4)$ which, as considered in the direction of movement of said sheet, is situated at a distance L after the exposure station and which delivers a second signal in response to the leading edge of said sheet, where

$$L = \frac{V1}{V1 + V2} \cdot S - R$$

where $V_1$ is the speed of passage, $V_2$ the return speed, S the length of the endless conveyor path (25,26,27,28) and R the length of the exposure station (7), as well as a circuit which is connected to the first detector $(S_1)$ and to the second detector $(S_4)$ and which delivers the said control signal if the first signal is generated in the absence of the second signal.

6. An exposure device according to claims 3 and 5, characterised in that the second measuring means $(S_3,S_4)$ are formed by the second detector $(S_4)$ and a third detector $(S_3)$ which is situated in an introduction conveyor path (20) in which the introduction means are operative, the distance between the two detectors as measured along the conveyor path corresponding to the length of the endless conveyor path, and in that said following conveyor path (34) as considered in the direction of introduction is situated past the second detector $(S_4)$.

7. An exposure device according to any one of the preceding claims, characterised in that in the absence of a sheet in the endless conveyor path (25,26,27,28) the means for driving the conveyor means (8a) drive the conveyor means (8a) in a return direction opposite to the direction of passage in order to convey into the endless conveyor path a sheet which, as considered in the return direction in front of the exposure station (7), has been brought into the endless conveyor path.

8. An exposure device according to claim 7, characterised in that after expiry of the period during which the means for driving the conveyor means (8a) convey the introduced sheet to a position past the exposure station (7) said means are de-activated and in that the said means are thereafter re-activated by an activating signal fed thereto.

## Patentansprüche

1. Belichtungsvorrichtung für Blätter, mit einer endlosen Transportbahn (25, 26, 27, 28), die eine Belichtungsstation (7) enthält, Transportmitteln (8a), mit denen ein Blatt wiederholt zum Zweck der Belichtung in einer Durchlaufrichtung durch die Transportbahn (25, 26, 27, 28) transportiert werden kann, Mitteln zum Antrieb der Transportmittel (8a), Einzugsmitteln (20) zum Einziehen eines Blattes in die endlose Transportbahn, selektiv schaltbaren Ausgabemitteln (31), zur Ausgabe von Blättern aus der endlosen Transportbahn und einer ersten Messeinrichtung $(S_1, S_4)$, die feststellt, ob die Länge eines eingezogenen Blattes grösser oder kleiner als ein vorgegebener Wert ist, und die, wenn die Länge kleiner als dieser Wert ist, ein Steuersignal erzeugt, dadurch gekennzeichnet, dass die Mittel zum Antrieb der Transportmittel (8a) umschaltbar sind zum Antrieb der Transportmittel (8a) in Gegenrichtung, und dass Steuermittel vorgesehen sind, die auf das Steuersignal hin die Umschaltung zu einem Zeitpunkt bewirken, zu dem das Blatt die Belichtungsstation (7) passiert hat, und den umgeschalteten Zusand während einer Zeit aufrechterhalten, die zum Zurückführen des gesamten Blattes durch die Belichtungsstation benötigt wird.

2. Belichtungsvorrichtung nach Anspruch 1, dadurch gekennzeichnet, dass ausserdem eine der endlosen Transportbahn (25, 26, 27, 28) nachfolgende Transportbahn (34), ein Ablenkelement (35), das ein in die endlose Transportbahn eingezogenes Blatt in die nachfolgende Transportbahn (34) leiten kann, und Einstellmittel zum Betätigen des Ablenkelements (35) vorgesehen sind, und dass die Steuereinrichtung das Steuersignal ebenfalls erzeugt, wenn die Einstellmittel betätigt worden sind.

3. Belichtungsvorrichtung nach Anspruch 2, dadurch gekennzeichnet, daß eine zweite Meßeinrichtung (S₃, S₄) vorgesehen ist, die feststellt, ob die Länge eines eingezogenen Blattes größer oder kleiner ist als ein der Länge der endlosen Transportbahn (25, 26, 27, 28) entsprechender Wert und die die Einstellmittel betätigt, wenn die ermittelte Länge größer als diese Länge ist.

4. Belichtungsvorrichtung nach einem der vorstehenden Ansprüche, dadurch gekennzeichnet, daß die Geschwindigkeit, mit der die Transportmittel (8a) ein belichtetes Blatt durch die Belichtungsstation (7) zurückführen, größer ist als die Geschwindigkeit, mit der sie ein Blatt während der Belichtung in Durchlaufrichtung transportieren.

5. Belichtungsvorrichtung nach einem der vorstehenden Ansprüche, dadurch gekennzeichnet, daß die erste Meßeinrichtung (S₁, S₄) einen ersten Fühler (S₁), der an einem Ausgang der Belichtungsstation (7) angeordnet ist und ein erstes Signal bei dem Durchgang der nachlaufenden Kante eines die Belichtungsstation (7) verlassenden Blattes erzeugt, einen zweiten Fühler (S₄), der in Bewegungsrichtung des Blattes in einem Abstand (L) hinter der Belichtungsstation angeordnet ist und ansprechend auf die vorauslaufende Kante des Blattes ein zweites Signal erzeugt, wobei:

$$L = \frac{V1}{V1 + V2} \cdot S - R$$

ist, wenn V₁ die Durchlaufgeschwindigkeit, V₂ die Rücklaufgeschwindigkeit, S die Länge der endlosen Transportbahn (25, 26, 27, 28) und R die Länge der Belichtungsstation (7) bezeichnet, sowie ferner eine Schaltung aufweist, die mit dem ersten Fühler (S₁) und dem zweiten Fühler (S₄) verbunden ist und das Steuersignal erzeugt, wenn das erste Signal in Abwesenheit des zweiten Signals erzeugt wird.

6. Belichtungsvorrichtung nach den Ansprüchen 3 und 5, dadurch gekennzeichnet, daß die zweite Meßeinrichtung (S₃, S₄) durch den zweiten Fühler (S₄) und einen dritten Fühler (S₃) gebildet wird, der in einer Einzugs-Transportbahn (20) angeordnet ist, in der die Einzugsmittel wirksam sind, wobei der Abstand zwischen den beiden Fühlern, längs der Transportbahn gemessen, der Länge der endlosen Transportbahn entspricht, und daß die nachfolgende Transportbahn (34) in Einzugsrichtung hinter dem zweiten Fühler (S₄) angeordnet ist.

7. Belichtungsvorgang nach einem der vorstehenden Ansprüche, dadurch gekennzeichnet, daß, wenn sich kein Blatt in der endlosen Transportbahn (25, 26, 27, 28) befindet, die Mittel zum Antrieb der Transportmittel (8a) die Transportmittel (8a) in einer Rücklaufrichtung entgegengesetzt zu der Durchlaufrichtung antreiben, um der endlosen Transportbahn ein Blatt zuzuführen, das in Rücklaufrichtung gesehen vor der Belichtungsstation (7) in die endlose Transportbahn eingeführt wurde.

8. Belichtungsvorrichtung nach Anspruch 7, dadurch gekennzeichnet, daß nach Ablauf der Zeitdauer, während der die Mittel zum Antrieb der Transportmittel (8a) das zugeführte Blatt in eine Position hinter der Belichtungsstation (7) transportieren, diese Mittel stillgesetzt werden und daß diese Mittel anschließend durch ein zugeführtes Aktivierungssignal wieder in Betrieb gesetzt werden.

**Revendications**

1. Dispositif d'exposition de feuilles, comprenant un trajet sans fin de transport (25, 26, 27, 28) dont un poste d'exposition (7) fait partie, un dispositif de transport (8a) qui permet le passage répété d'une feuille le long du trajet de transport (25, 26, 27, 28) afin qu'elle soit exposée dans un sens de passage, un dispositif d'entraînement du dispositif de transport (8a), un dispositif (20) d'introduction d'une feuille sur le trajet sans fin de transport, un dispositif (31) d'évacuation qui peut être commuté sélectivement et qui est destiné à évacuer des feuilles du trajet sans fin de transport, et un premier dispositif de mesure (S₁, S₄) qui détermine si la longueur d'une feuille qui a été introduite est supérieure ou inférieure à une valeur prédéterminée et qui, lorsque la longueur est inférieure à cette valeur, transmet un signal de commande, caractérisé en ce que le dispositif d'entraînement du dispositif de transport (8a) est destiné à être commuté afin que le dispositif de transport (8a) soit entraîné en sens opposé, et en ce qu'un dispositif de commande est disposé afin que, en fonction du signal de commande, il assure la commutation à un moment où une feuille a dépassé le poste d'exposition (7) et maintient l'état commuté pendant le temps nécessaire au retour de toute la feuille au poste d'exposition.

2. Dispositif d'exposition selon la revendication 1, caractérisé en ce qu'il comporte aussi un trajet de transport (34) qui prolonge le trajet sans fin de transport (25, 26, 27, 28), un élément déflecteur (35) qui peut guider, vers le trajet suivant de transport (34), une feuille transmise par le trajet sans fin de transport, et un dispositiv de réglage destiné à commander l'élément déflecteur (35), et en ce que le dispositif de commande transmet aussi un signal de commande lorsque le dispositif de réglage a été manœuvré.

3. Dispositif d'exposition selon la revendication 2, caractérisé en ce qu'un second dispositif de mesure (S₃, S₄) est disposé et détermine si la longueur d'une feuille qui a été introduite est supérieure ou inférieure à une valeur correspondant à la longueur du trajet sans fin de transport (25, 26, 27, 28), et il commande le dispositif de réglage lorsque cette longueur déterminée est supérieure à ladite longueur.

4. Dispositif d'exposition selon l'une quelconque des revendications précédentes, caractérisé en ce que la vitesse à laquelle le dispositif de transport (8a) fait reculer une feuille exposée au poste d'exposition (7) est supérieure à la vitesse à laquelle il transporte une feuille pendant l'exposition dans le sens de circulation.

5. Dispositif d'exposition selon l'une quelconque des revendications précédentes, caractérisé en ce que le premier dispositif de mesure (S₁, S₄) comporte un premier détecteur (S₁) qui est placé à une sortie du poste d'exposition (7) et qui transmet un premier signal à la suite du passage du bord postérieur d'une feuille quittant le poste d'exposition (7), un second détecteur (S₄) qui, dans le sens de déplacement de la feuille, est placé à une distance L après le poste d'exposition et qui transmet un second signal en fonction du bord antérieur de la feuille, avec

$$L = \frac{V1}{V1 + V2} \cdot S - R$$

V₁ étant la vitesse de circulation, V₂ la vitesse de retour, S la longueur du trajet sans fin de transport (25, 26, 27, 28) et R la longueur du poste d'exposition (7), ainsi qu'un circuit qui est connecté au premier détecteur (S₁) et au second détecteur (S₄) et qui transmet le signal de commande lorsque le premier signal est créé en l'absence du second signal.

6. Dispositif d'exposition selon les revendications 3 et 5, caractérisé en ce que le second dispositif de mesure (S₃, S₄) est formé par le second détecteur (S₄) et un troisième détecteur (S₃) placé dans un trajet d'introduction (20) dans lequel le dispositif d'introduction peut fonctionner, la distance comprise entre les deux détecteurs, mesurée le long du trajet de transport, correspondant à la longueur du trajet sans fin de transport, et en ce que le trajet suivant de transport (34), considéré dans la direction d'introduction, est placé au-delà du second détecteur (S₄).

7. Dispositif d'exposition selon l'une quelconque des revendications précédentes, caractérisé en ce que, en l'absence d'une feuille sur le trajet sans fin de transport (25, 26, 27, 28), le dispositif d'entraînement du dispositif de transport (8a) entraîne le dispositif de transport (8a) dans le sens de retour opposé au sens de circulation afin qu'une feuille soit transportée dans le trajet sans fin de transport, cette feuille, considérée dans le sens de retour en avant du poste d'exposition (7), ayant été placée sur le trajet sans fin de transport.

8. Dispositif d'exposition selon la revendication 7, caractérisé en ce que, après l'expiration de la période dans laquelle le dispositif d'entraînement du dispositif de transport (8a) transporte la feuille introduite vers une position qui se trouve au-delà du poste d'exposition (7), ce dispositif est désactivé, et en ce que ce dispositif est ensuite réactivé par un signal d'activation qui lui est transmis.

Fig.1

Original in readiness (deflectors 31, 32 and 35 in the initial position)

Has deflector 33 been changed over? → Yes → counting value set to >1? → No → Pass original through and discharge via 21

counting value set to >1? → Yes → trailing edge passes $S_1$

Is counting value > 0? → No → Pass original through and discharge via 21

Is counting value > 0? → Yes

- Reverse direction of conveyance until now trailing edge passes $S_2$
- Reset counting value by 1.

Has deflector 33 been changed over? → No

Counting value set to 1? → No → Pass original through and discharge to 30

Counting value set to 1? → Yes → Change over deflector 31

Is original longer than endless path? → Yes → Change over deflector 35

Is original longer than endless path? → No → trailing edge passes $S_1$

Is counting value > 0? → No → Pass original through and discharge to 30

Is counting value > 0? → Yes

- Change over deflector 32
- Reset counting value by 1

Have $S_1$ and $S_4$ been actuated simultaneously? → No

- Reverse direction of conveyance until now trailing edge passes $S_2$
- Reset counting value by 1.

Have $S_1$ and $S_4$ been actuated simultaneously? → Yes

Is counting value > 0? → Yes / No

Fig.1a

Fig. 2

EP 0 197 587 B1

Fig.3

Fig.4

EP 0 197 587 B1